# EUROPÄISCHE PATENTSCHRIFT

(11) **EP 1 005 970 B1**
(45) Veröffentlichungstag und Bekanntmachung des Hinweises auf die Patenterteilung: **20.08.2003**
(21) Anmeldenummer: 99123466.7
(22) Anmeldetag: 25.11.1999
(51) Int. Cl.: B29B 11/10, B29B 11/16, B29C 47/00, B29D 29/00

(54) **Verfahren zum Herstellen eines endlosen Transport- oder Antriebsriemen**
Method of manufacturing an endless conveyor or driving belt
Procédé de fabrication d'une courroie transporteuse ou de transmission sans fin

(30) Priorität: 02.12.1998 DE 19855548; 09.01.1999 DE 19900551
(43) Veröffentlichungstag der Anmeldung: 07.06.2000
(73) Patentinhaber: BEHA Innovation GmbH, 79286 Glottertal (DE)
(72) Erfinder: Beha, Bernhard, 79286 Glottertal (DE)
(74) Vertreter: Patentanwälte Westphal, Mussgnug & Partner

(56) Entgegenhaltungen:
- DE-A- 3 813 338
- DE-A- 4 218 434
- US-A- 3 657 938
- US-A- 4 701 154
- US-A- 4 708 610
- US-A- 5 824 410
- PATENT ABSTRACTS OF JAPAN vol. 014, no. 423 (C-0757), 12. September 1990 (1990-09-12) & JP 02 163142 A (BANDO CHEM IND LTD), 22. Juni 1990 (1990-06-22)

## Beschreibung

Die Erfindung betrifft ein Verfahren zum Herstellen eines endlosen Transport- oder Antriebsriemens gemäß dem Oberbegriff des Anspruchs 1.

In der Antriebs- und Fördertechnik werden in großem Umfang extrudierte Riemen aus einem thermoplastischen Kunststoff, insbesondere auf Polyurethan- und Polyester-Basis verwendet. Zur Herstellung wird ein Profil (Profilmaterial) als Meterware extrudiert und in den meisten Anwendungsfällen in geeigneter Länge zu endlosen Riemen verschweißt. Je nach Verwendungszweck sind die Riemen als Rundriemen, Keilriemen, Flachriemen oder mit sonstigem Profilquerschnitt ausgebildet.

Um die Zug- und Reißfestigkeit solcher Riemen zu erhöhen, ist es bekannt (z.B.DE-A-4218 434, US-A-5 824 410, US-A-4701154), in das Extrusionsprofil aus dem thermoplastischen Kunststoff im Koextrusionsverfahren eine Seele (Kern) als Zugträger einzubetten. Diese Zugträger-Seele besteht aus einem Strang aus Verstärkungsfasern, z.B. Aramid-Fasern, Glasfasern oder Carbonfasern, oder aus einem Nylon- oder Drahtseil.

Aus der DE-A-3813338 ist es bekannt, die Verstärkungsfasern als endlose parallele Fasern in gleichmäßiger Verteilung in dem Kunststoffprofil einzubetten.

Bei diesen bekannten zugverstärkten Riemen treten Probleme beim Verschweißen des Extrusionsprofils zu endlosen Riemen auf. Die Zugträger-Seele behindert das thermoplastische Verschweißen des Kunststoffs. Es ist daher üblich, die Zugträger-Seele an den miteinander zu verschweißenden Enden des Extrusionsprofils vor dem Verschweißen zu entfernen, so daß an der Schweißstelle nur das thermoplastische Kunststoffmaterial zusammenstößt und verschweißt wird. Das Entfernen der Zugträger-Seele ist ein zeitraubender Arbeitsschritt. Insbesondere aber ergibt sich durch das Entfernen der Zugträger-Seele an der Schweißstelle eine unverstärkte Schwachstelle des Riemens mit geringerer Reiß- und Dehnungsfestigkeit. Die bekannten Riemen neigen daher zu einem Reißen an der Schweißnaht.

Aus der US-A-3657938 ist ein Verfahren der eingangs genannten Gattung bekannt, bei welchem ein endloser Riemen mit einer Zugverstärkung hergestellt wird, die aus Kunststoff mit eingebetteten Stapelfasern besteht. Der endlose Riemen wird im Spritzgussverfahren hergestellt. Hierbei wird der mit den Stapelfasern vermischte Kunststoff in eine Spritzgussform eingespritzt, in welche weitere Schichten des Riemens eingelegt oder zusätzlich eingespritzt werden. Durch die Herstellung des Riemens in seiner endgültigen endlosen Form werden die Probleme des Verschweißens eines Extrusionsprofils vermieden. Es wird allerdings für jede Größe des endlosen Riemens eine gesonderte Spritzgussform benötigt.

Der Erfindung liegt die Aufgabe zugrunde, ein Verfahren zu schaffen, mit welchem endlose Transport- oder Antriebsriemen mit hoher Zug- und Reißfestigkeit kostengünstig hergestellt werden können.

Diese Aufgabe wird erfindungsgemäß gelöst durch ein Verfahren mit den Merkmalen des Anspruchs 1.

Vorteilhafte Ausführungen der Erfindung sind in den Unteransprüchen gekennzeichnet.

Erfindungsgemäß wird ein Profil (Profilmaterial) für den Transport- oder Antriebsriemen aus einem thermoplastischen Kunststoff extrudiert. Vorzugsweise wird ein thermoplastisches Elastomer auf Polyurethan- oder Polyester-Basis verwendet. Die Extrusion wird mit einer an sich bekannten Extrusionsanlage, z.B. einem Schneckenextruder durchgeführt.

Dem thermoplastischen Kunststoff wird ein Anteil von etwa 0,5 bis 40 Gewichtsprozent an Verstärkungsfaser zugemischt. Als Verstärkungsfasern haben sich inbesondere Glasfasern bewährt. Ebenso können auch andere Verstärkungsfasern, wie Aramid-Fasern (Kevlar) oder Carbon-Fasern verwendet werden.

Je nach Art des thermoplastischen Kunststoffs und der Verstärkungsfasern ergeben sich besonders gute Eigenschaften bei einem Fasernanteil von 5 bis 30 Gewichtsprozent und insbesondere von 8 bis 20 Gewichtsprozent des Kunststoffes. Die Prozentangaben sind dabei jeweils auf die Gesamtmenge aus Kunststoff und Verstärkungsfaser bezogen.

Die Verstärkungsfasern sind in einer möglichst homogenen Verteilung in den Kunststoff eingemischt. Für eine solche homogene Zumischung der Verstärkungsfasern zu dem Kunststoff ist es besonders günstig, wenn die Verstärkungsfasern als Stapelfasern (Kurzfasern) dem Kunststoff zugemischt werden. Insbesondere können solche Stapelfasern bereits mit der pulver- oder granulatförmigen Kunststoffmasse homogen vermischt der Extrusionsanlage zugeführt werden.

Das erfindungsgemäße Extrusionsprofil kann unmittelbar als Transport- oder Antriebsriemen verwendet und zu endlosen Riemen verschweißt werden. Das Extrusionsprofil bildet dabei den gesamten Profilquerschnitt des Riemens. Der gesamte Riemenquerschnitt ist durch die Verstärkungsfasern verstärkt.

Das erfindungsgemäße Extrusionsprofil kann auch als Zugverstärker-Seele verwendet werden. In diesem Falle wird das durch die Verstärkungsfasern verstärkte Extrusionsprofil mit einem thermoplastischen Kunststoff ohne Verstärkungsfasern ummantelt. Hierzu wird das erfindungsgemäße Extrusionsprofil einer weiteren Extrusionsanlage zugeführt und im Koextrusionsverfahren mit dem thermoplastischen Kunststoff ummantelt. Eine besonders gute Verbindung zwischen dem Extrusionsprofil der Zugträger-Seele und der Ummantelung ergibt sich, wenn für das Extrusionsprofil und die Ummantelung derselbe thermoplastische Kunststoff verwendet wird.

Die Querschnittsform des Extrusionsprofils kann frei gewählt werden und ergibt sich aus dem Verwendungszweck. Es können Rundprofile, Keilprofile, Flachprofile und jede sonstige Profilform hergestellt werden. Wird das erfindungsgemäße Extrusionsprofil als Zugträger-Seele verwendet, so kann auch das Profil der Ummantelung in der Anwendung entsprechender Form gewählt werden.

Der prozentuale Anteil der Verstärkungsfasern ist zumindest teilweise auch davon abhängig, ob das faserverstärkte Extrusionsprofil den gesamten Profilquerschnitt des Riemens bildet oder als kunststoffummantelte Zugträger-Seele verwendet wird. Insbesondere Glasfasern als zugemischte Verstärkungsfasern bewirken einen stärkeren Verschleiß der Extrusionsdüse. Die Extrusionsdüsen für kompliziertere Riemenprofile sind verhältnismäßig kostspielig. Sofern der gesamte Profilquerschnitt durch Glasfasern verstärkt ist, wird daher versucht, den Anteil an Verstärkungsfasern möglichst gering zu halten, um den Verschleiß der kostspieligen Düse gering zu halten, wobei jedoch der Anteil der Verstärkungsfasern groß genug sein muß, um die gewünschte Verbesserung der Zug- und Reißfestigkeit zu erreichen. In diesen Anwendungsfällen wird der Anteil der Verstärkungsfasern vorzugsweise bei etwa 0,5 bis 15 Gewichtsprozent gewählt, wobei im allgemeinen bei einem Anteil von etwa 5 bis 10 Gewichtsprozent eine deutliche Verbesserung der Zug- und Reißfestigkeit erzielt wird, während der Verschleiß der Extrusionsdüsen noch nicht zu groß ist. Wird das faserverstärkte Extrusionsprofil dagegen als Zugträger-Seele verwendet, die mit Kunststoff ummantelt wird, so kann für die Zugträger-Seele ein einfaches Querschnittsprofil, z. B. ein kreisförmiges Querschnittsprofil, verwendet werden. Die kompliziertere Profilform des Riemens ergibt sich durch die Kunststoffummantelung. Da Extrusionsdüsen mit einfachem Querschnitt, z. B. kreisförmigem Querschnitt, kostengünstig hergestellt werden können, kann in diesen Fällen ein stärkerer Verschleiß durch die Verstärkungsglasfasern in Kauf genommen werden. Es können daher höhere Anteile an Verstärkungsfasern eingesetzt werden, die bei etwa 5 bis 20 Gewichtsprozent, vorzugsweise bei etwa 10 bis 15 Gewichtsprozent liegen.

Das erfindungsgemäße Extrusionsprofil kann ohne Vor- oder Nachbearbeitung thermoplastisch verschweißt werden. Hierzu können die an sich bekannten Schweißverfahren verwendet werden, wie Spiegelschweißen, berührungsloses Schweißen, Reibschweißen, Infrarotschweißen, Ultraschallschweißen und Heißluftschweißen.

Das Extrusionsprofil weist an der Schweißnaht dieselbe hohe Zug- und Reißfestigkeit auf wie in den sonstigen nicht geschweißten Bereichen. Bildet das erfindungsgemäße Extrusionsprofil den gesamten Profilquerschnitt des Riemens, so ergibt sich eine Verschweißbarkeit, die durch die Verstärkungsfasern unbeeinflußt ist. Wird ein Riemen durch Ummantelung des erfindungsgemäßen Extrusionsprofil hergestellt, so läßt sich dieser Riemen über seinen gesamten Profilquerschnitt verschweißen, ohne daß die durch das Extrusionsprofil gebildete Zugträger-Seele gesondert bearbeitet werden muß. Die. Verschweißung erfolgt über den Querschnitt des Extrusionsprofils und der Ummantelung in gleicher Weise und homogen.

Zugversuche mit dem erfindungsgemäßen Extrusionsprofil ergaben eine einwandfreie Verbindung im Bereich der Schweißnaht. Die Extrusionsprofile mit der Schweißnaht wurden z.B. in folgenden Zugversuchen geprüft:
1. Ein erfindungsgemäßes Rundprofil mit 3mm Durchmesser aus Polyurethan mit einem Glasfaseranteil von 10% brach erst bei einer Belastung von 250N und einer Dehnung von 65%.
2. Dieses Extrusionsprofil wurde im Koextrusionsverfahren zusätzlich mit Polyurethan (PU80A) zu einem Rundriemen mit einem Durchmesser von 9mm ummantelt. Der Rundriemen war bis zu 500N belastbar bei einer Dehnung von 400% ohne daß ein Bruch des Riemens auftrat. Erst bei einer Dehnung von 700% brach der Riemen. Der Bruch trat aber weder bei der Zugträger-Seele aus dem erfindungsgemäßen Extrusionsprofil noch bei der Ummantelung im Bereich der Schweißnaht auf.

## Patentansprüche

1. Verfahren zum Herstellen eines endlosen Transport- oder Antriebsriemens aus einem thermoplastischen Kunststoff mit einer Zugverstärkung aus in den Kunststoff eingebetteten als Stapelfasern ausgebildeten Verstärkungsfasern, **dadurch gekennzeichnet, dass** die Stapelfasern mit einem Anteil von 0,5 bis 40 Gewichtsprozent dem Kunststoff zugemischt werden, dass der mit den Stapelfasern gemischte Kunststoff zu einem Profil extrudiert wird und dass das Profil in geeigneter Länge zu dem endlosen Riemen thermoplastisch verschweißt wird, wobei das Verschweißen homogen über den gesamten Profilquerschnitt erfolgt.

2. Verfahren nach Anspruch 1,
**dadurch gekennzeichnet, daß** ein Anteil von 5 bis 30 Gewichtsprozent, vorzugsweise von 8 bis 20 Gewichtsprozent der Verstärkungsfasern dem Kunststoff zugemischt sind.

3. Verfahren nach Anspruch 1 oder 2,
**dadurch gekennzeichnet, daß** der thermoplastische Kunststoff ein Elastomer auf Polyurethan- oder Polyester-Basis ist.

4. Verfahren nach einem der Ansprüche 1 bis 3,
**dadurch gekennzeichnet, daß** die Verstärkungsfasern Glasfasern sind.

5. Verfahren nach einem der Ansprüche 1 bis 3,
**dadurch gekennzeichnet, daß** die Verstärkungsfasern Aramid-Fasern oder Carbon-Fasern sind.

6. Verfahren nach einem der Ansprüche 1 bis 5,
**dadurch gekennzeichnet, dass** das Extrusionsprofil den gesamten Profilquerschnitt des Riemens bildet.

7. Verfahren nach einem der Ansprüche 1 bis 5,
**dadurch gekennzeichnet, daß** das Extrusionsprofil mit einem thermoplastischen Kunststoff ummantelt ist.

8. Verfahren nach Anspruch 7,
**dadurch gekennzeichnet, daß** das Extrusionsprofil im Koextrusionsverfahren mit dem thermoplastischen Kunsstoff ummantelt wird.

9. Verfahren nach Anspruch 7 oder 8,
**dadurch gekennzeichnet, daß** der Kunststoff des Extrusionsprofils und der Kunststoff der Ummantelung gleich sind.

10. Verfahren nach Anspruch 1,
**dadurch gekennzeichnet, daß** die Stapelfasern mit dem pulver- oder granulatförmigen Kunststoff homogen vermischt der Extrusion zugeführt werden.

## Claims

1. A manufacturing process for an endless conveyor or driving belt made from a thermoplastic synthetic material having a tensile reinforcement of reinforcing fibres that are embedded in the synthetic material and are constructed as staple fibres,
**characterised in that** the staple fibres are admixed to the synthetic material with a portion of 0.5 to 40 % by weight,
**in that** the synthetic material mixed with the staple fibres is extruded to a profile
and **in that** the profile is thermoplastically welded in a suitable length to the endless belt, with the welding taking place homogenously over the entire profile cross section.

2. A process according to Claim 1,
**characterised in that** a portion of 5 to 30 percent by weight, preferably of 8 to 20 percent by weight of the reinforcing fibres, are admixed to the synthetic material.

3. A process according to Claim 1 or 2,
**characterised in that** the thermoplastic synthetic material is an elastomer on a polyurethane or polyester base.

4. A process according to one of Claims 1 to 3,
**characterised in that** the reinforcing fibres are glass fibres.

5. A process according to one of Claims 1 to 3,
**characterised in that** the reinforcing fibres are aramide fibres or carbon fibres.

6. A process according to one of Claims 1 to 5,
**characterised in that** the extrusion profile forms the overall profile cross section of the belt.

7. A process according to one of Claims 1 to 5,
**characterised in that** the extrusion profile is encased with a thermoplastic synthetic material.

8. A process according to Claim 7,
**characterised in that** the extrusion profile is encased with the thermoplastic synthetic material in the extrusion process.

9. A process according to Claim 7 or 8,
**characterised in that** the synthetic material of the extrusion profile and the synthetic material of the casing are identical.

10. A process according to Claim 1,
**characterised in that** the staple fibres are supplied for extrusion homogeneously mixed with the pulverulent or granulated plastic.

## Revendications

1. Procédé de production d'une courroie transporteuse ou de transmission sans fin faite d'une matière synthétique thermoplastique possédant un renforcement de traction fait de fibres de renforcement noyées dans la matière synthétique et constitué par des fibres coupées,
**caractérisé en ce que**
les fibres coupées sont mélangées à la matière synthétique dans une proportion de 0,5 à 40 % en poids, la matière synthétique mélangée des fibres coupées est extrudée pour former un profilé et le profilé est soudé par le procédé thermoplastique à une longueur appropriée pour former la courroie sans fin, le soudage s'effectuant de façon homogène sur toute la section du profilé.

2. Procédé selon la revendication 1,
**caractérisé en ce qu'**
une proportion de 5 à 30 % en poids, de préférence de 8 à 20 % en poids, des fibres de renforcement est ajoutée en mélange à la matière plastique.

3. Procédé selon la revendication 1 ou 2,
**caractérisé en ce que**
la matière synthétique thermoplastique est un élastomère à base de polyuréthane ou de polyester.

4. Procédé selon une des revendications 1 à 3,
**caractérisé en ce que**
les fibres de renforcement sont des fibres de verre.

5. Procédé selon une des revendications 1 à 3,
**caractérisé en ce que**
les fibres de renforcement sont des fibres d'aramide ou des fibres de carbone.

6. Procédé selon une des revendications 1 à 5,
**caractérisé en ce que**
le profilé extrudé forme la totalité de la section de profilé de la courroie.

7. Procédé selon une des revendications 1 à 5,
**caractérisé en ce que**
le profilé extrudé est enrobé d'une matière synthétique thermoplastique.

8. Procédé selon une des revendications 1 à 7
**caractérisé en ce que**
le profilé extrudé est enrobé de la matière synthétique thermoplastique dans le procédé de co-extrusion.

9. Procédé selon une des revendications 7 ou 8,
**caractérisé en ce que**
la matière synthétique du profilé extrudé et la matière synthétique de l'enrobage sont les mêmes.

10. Procédé selon la revendication 1,
**caractérisé en ce que**
les fibres coupées sont acheminées à l'extrusion en mélange homogène avec la matière synthétique pulvérulente ou granulée.
